# EUROPÄISCHE PATENTANMELDUNG

(11) **EP 0 985 588 A2**
(43) Veröffentlichungstag der Anmeldung: **15.03.2000**
(21) Anmeldenummer: 99112648.3
(22) Anmeldetag: 02.07.1999
(51) Int. Cl.: B62B 3/00

(54) **Transportwagen für Wäsche**

(30) Priorität: 12.09.1998 DE 19841781
(71) Anmelder: LKE Gesellschaft für Logistik- und Kommunikations-Equipment mbH, 45768 Marl (DE)
(72) Erfinder: Feser, Robert, 45968 Gladbeck (DE); Grigo, Lothar, 44536 Lünen (DE)
(74) Vertreter: Cohausz & Florack

(57) **Zusammenfassung**

Dargestellt ist ein Transportwagen für Schmutz- und Frischwäsche mit einem Fahrgestell (2) mit Rollen (3) und einem kastenförmigen Aufbau, der feststehende Seitenwände (4,5) und eine feststehende Rückwand (6) sowie herunterklappbare und in horizontaler Stellung arretierbare Fachböden (7,8,9) aufweist. Der gleichzeitige Transport sowohl hängender als auch liegender Frischwäsche sowie ein einfaches Be- und Entladen des Transportwagens wird dadurch ermöglicht, daß eine parallel zu den Seitenwänden (4,5) angeordnete Zwischenwand (10) den Aufbau in zwei Abteile (12,13) unterteilt, in denen die einteilig oder geteilt ausgebildeten Fachböden (7,8,9) an den Seitenwänden (4,5) und/oder der Zwischenwand (10) angelenkt sind.

## Beschreibung

Die Erfindung betrifft einen Transportwagen für Wäsche und Bekleidungsstücke mit einem Fahrgestell mit Rollen und einem kastenförmigen Aufbau, der feststehende Seitenwände und eine feststehende Rückwand sowie herunterklappbare und in horizontaler Stellung arretierbare Fachböden aufweist.

Derartige Transportwagen werden bei der Lagerung und dem Transport von Frisch- und Schmutzwäsche aber auch für zu reinigende und gereinigte Bekleidungsstücke, besonders in Krankenhäusern, Pflegeheimen und Hotels, eingesetzt.

Derartige Transportwagen für Wäsche und Bekleidungsstücke sind aus der Gebrauchsmusterschrift DE 93 00 111 U1 bekannt. Sie weisen in der Regel Fachböden auf, die sich zwischen den Seitenwänden erstrecken. Auf diesen Fachböden wird die zu transportierende, gefaltete Frischwäsche, in der Regel nach Art der Wäsche sortiert, aufbewahrt. Für den Transport von Schmutzwäsche, lose oder in Säcken, können die Fachböden aus der horizontalen Position so nach vorne und unten geklappt werden, daß sie die sonst offene Vorderseite des Transportwagens zumindest teilweise verschließen. Die zu transportierende Schmutzwäsche kann dann von oben in den nun an allen Seiten fast gänzlich geschlossenen kastenförmigen Aufbau des Transportwagens geworfen werden.

Aus der Praxis bekannte derartige Transportwagen können zusätzlich eine an den Seitenwänden angeschlagene Kleiderstange aufweisen, die es ermöglicht, bei heruntergeklappten Fachböden hängende Frischwäsche auf Kleiderbügeln zu transportieren. Diese Kleiderstange kann aus ihrer in der Relation zu den Seitenwänden mittigen Position zur Freigabe des Transportwagens für dessen Beladung von oben so umgeklappt werden, daß sie an und parallel zur Rückwand verläuft.

Transportwagen der oben genannten Art sind verbesserungswürdig. Solche bekannten Transportwagen sind immer nur zu einem der oben genannten Verwendungszwecke einsetzbar. So können entweder nur an der Kleiderstange hängende Frischwäsche und/oder Bekleidungsstücke oder auf den Fachböden liegende, gefaltetete Frischwäsche oder aber bei heruntergeklappten und die Vorderseite verschließenden Fachböden nur Schmutzwäsche transportiert werden. Dies erweist sich in bekannten Einsatzgebieten solcher Transportwagen für Wäsche als unpraktisch. Bei den bekannten Transportwagen erweist sich ferner das Aufhängen der hängenden Frischwäsche als schwierig, da sie über die nach vorne geklappten Fachböden hinweggehoben werden muß, somit also beinahe von oben in den Transportwagen eingeführt und dann aufgehangen werden muß. Dies ist bei der üblichen Höhe solcher Transportwagen (2 m) unhandlich.

Die Aufgabe der Erfindung besteht darin, den gleichzeitigen Transport sowohl hängender als auch liegender Frischwäsche zu ermöglichen und das Be- und Entladen des Transportwagens zu vereinfachen.

Die voranstehend genannte Aufgabe wird erfindungsgemäß durch einen Transportwagen für Wäsche gelöst, bei dem eine parallel zu den Seitenwänden angeordnete Zwischenwand den Aufbau in zwei Abteile unterteilt, in denen die einteilig oder mit Teilböden geteilt ausgebildeten Fachböden an den Seitenwänden und/oder der Zwischenwand angelenkt sind. Dabei sind die einteiligen Fachböden mit ihren den angelenkten Rändern gegenüberliegenden freien Rändern an der jeweils gegenüberliegenden Wand arretierbar. Die Teilböden weisen an den den angelenkten Rändern gegenüberliegenden freien Rändern einen Stützmechanismus auf, mit dem sie in horizontaler Stellung bei Beladung mit einer Last aufeinander abstützend verriegelbar sind und nach Entlastung durch Hochklappen entriegelbar und herunterklappbar sind.

Durch diese erfindungsgemäße Ausgestaltung eines Transportwagens für Wäsche und Kleidung ergibt sich eine Vielzahl von Transportvarianten für Wäsche. Zum einen kann in beiden Abteilen bei hochgeklappten Fachböden gefaltete Frischwäsche transportiert werden, zum anderen besteht die Möglichkeit, in je einem oder in beiden Abteilen die Fachböden herunterzuklappen und so zusätzlich oder ausschließlich hängende Frischwäsche und/oder Kleidungsstücke zu transportieren. Diese bedarfsangepaßte Transportmöglichkeit ermöglicht den kombinierten Transport von hängender und gefalteter Frischwäsche. Zusätzlich kann durch Herunterklappen aller Fachböden Schmutzwäsche in der bekannten Art transportiert werden.

Dadurch, daß die klappbaren Fachböden an den Seitenwänden angelenkt sind und somit in ihrer heruntergeklappten Position parallel zu den Seitenwänden liegen, wird die zum Beladen offene Vorderseite nicht, wie bei den bekannten Transportwagen, durch heruntergeklappte Fachböden blockiert. Dies vereinfacht das Aufhängen der zu transportierenden hängenden Frischwäsche.

Ein besonders einfach zu lösender Stützmechanismus ergibt sich dadurch, daß mindestens ein Teilboden eines jeden Teilbodenpaares ein kammartiges Element aufweist, das in den gegenüberliegenden Teilboden eingreift. Dabei greift es so in den gegenüberliegenden Teilboden ein, daß sich zwei Abstützpunkte bilden. An dem dem Anlenkpunkt entfernteren Abstützpunkt stützt sich das kammartige Element auf den gegenüberliegenden Teilboden, während an dem dem Anlenkpunkt näheren Abstützpunkt das kammartige Element den Rand des gegenüberliegenden Teilbodens stützt. Dieser Stützmechanismus ermöglicht es, durch leichtes Hochklappen der Teilböden über den Punkt des ersten Ineinandergreifens der Teilböden hinaus, den Stützmechanismus zu lösen. Ein rasches Lösen des Stützmechanismus ist auch dadurch gegeben, daß die Böden nach einmaligem Hochklappen über den Punkt des ersten Ineinandergreifens hinaus beim Herunterklappen nicht von selbst wieder ineinandergreifen.

Der Transportwagen ist besonders dann variabel gestaltbar, wenn die Abteile unterschiedlich breit sind. So kann bei einem gemeinsamen Transport von hängender Frischwäsche und gefalteter Frischwäsche oder gereinigter Kleidungsstücke entweder eine große Zahl von hängender Frischwäsche und begleitende gefaltete Frischwäsche transportiert werden, oder eine große Zahl von gefalteter Frischwäsche mit einer geringeren Anzahl von hängender Frischwäsche.

Versuche haben gezeigt, daß die Handhabbarkeit des Transportwagens dadurch gesteigert wird, daß das schmalere Abteil ungeteilte, das breitere Abteil aber geteilte Fachböden enthält. Die Verwendung von geteilten Fachböden verringert die Überdeckung eines heruntergeklappten Teilbodens mit dem nächsten darunter angeordneten Teilboden oder dessen Anlenkung. Die heruntergeklappten Teilböden liegen deshalb fast eben an der Seiten- oder Zwischenwand an und schmälern nicht den zur Verfügung stehenden Stauraum des Abteils. Dies gilt insbesondere dann, wenn die Teilböden gleich groß sind und so angebracht sind, daß der vertikale Abstand der geteilten Fachböden zueinander gleich der Breite der Teilböden ist.

Die Formsteifigkeit eines Transportwagens für Wäsche kann dadurch erhöht werden, daß die der Rückwand gegenüberliegende Vorderwand von verriegelbaren Türen gebildet wird. Diese weisen gegenüber den herkömmlich eingesetzten Rückhaltebändern eine höhere Formsteifigkeit auf. Eine besondere Formsteifigkeit der Transportwagen ist besonders dann erwünscht, wenn die Transportwagen in großer Zahl auf Lastkraftwagen transportiert werden. Hierbei ist es üblich, daß die Transportwagen fest verzurrt werden. Eine besondere Formsteifigkeit der Transportwagen verhindert die Verformung und Verwindung während eines solchen Transports. Darüber hinaus bieten verriegelbare Türen einen besseren Schutz gegen das Herausfallen der zu transportierenden Frischwäsche.

Das Gesamtgewicht solcher Transportwagen für Wäsche kann erheblich reduziert werden, wenn für die Seitenwände, die Rückwand, die Türen und die Fachböden Gitterwände beziehungsweise Gitterböden eingesetzt werden. Sowohl beim Transport der Transportwagen für Wäsche, aber auch beim Fortbewegen der Transportwagen durch das Bedienpersonal ist es von grundsätzlicher Bedeutung, daß keine unnötigen Massen bewegt werden müssen.

Eine einfache Möglichkeit, die hängende Frischwäsche in den Transportwagen aufzunehmen, besteht darin, daß an den Seitenwänden eine parallel zur Rückwand verlaufende Trag- und Klemmstange angelenkt wird, die aus einer ersten Position über dem Aufbau in eine zweite Position hinter beziehungsweise neben den Aufbau schwenkbar ist. Diese aus ihrer zentralen Position wegklappbare Trag- und Klemmstange ermöglicht die Lagerung von gefalteter Frischwäsche, die über die Höhe des Wagens hinausragt. Zusätzlich kann die derart schwenkbare Trag- und Klemmstange dazu eingesetzt werden, die herausragenden Stapel im Schwenkbereich festzuhalten.

Die Erfindung ist nachfolgend anhand lediglich ein bevorzugtes Ausführungsbeispiel darstellender Zeichnungen näher erläutert. In den Zeichnungen zeigen:
- Figur 1: einen Transportwagen für Wäsche in Frontalansicht mit Fachböden in Horizontalstellung;
- Figur 2: einen Transportwagen für Wäsche gemäß Figur 1 mit geschlossenen Türen;
- Figur 3: einen Transportwagen für Wäsche gemäß Figur 2 in einem Querschnitt entlang der in Figur 2 angegebenen Schnittlinie A-A;
- Figur 4a,b,c: einen Stützmechanismus der geteilten Fachböden eines Transportwagens für Wäsche gemäß Figur 1 in unterschiedlichen Positionen während des Ineinandergreifens der Teilböden;
- Figur 5a,b,c: einen Transportwagen für Wäsche gemäß Figur 1 in verschiedenen Transportkonfigurationen.

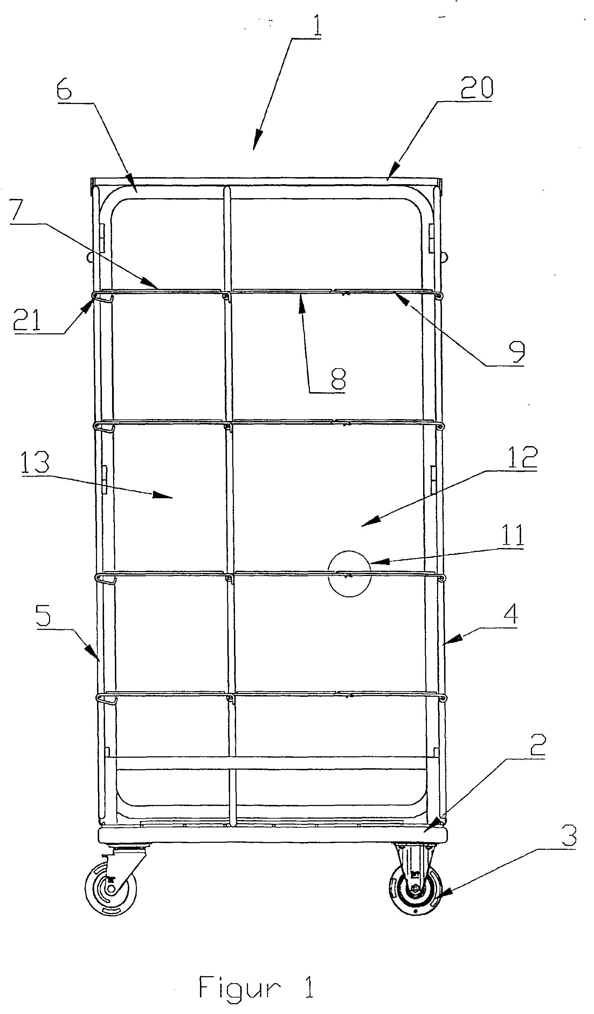

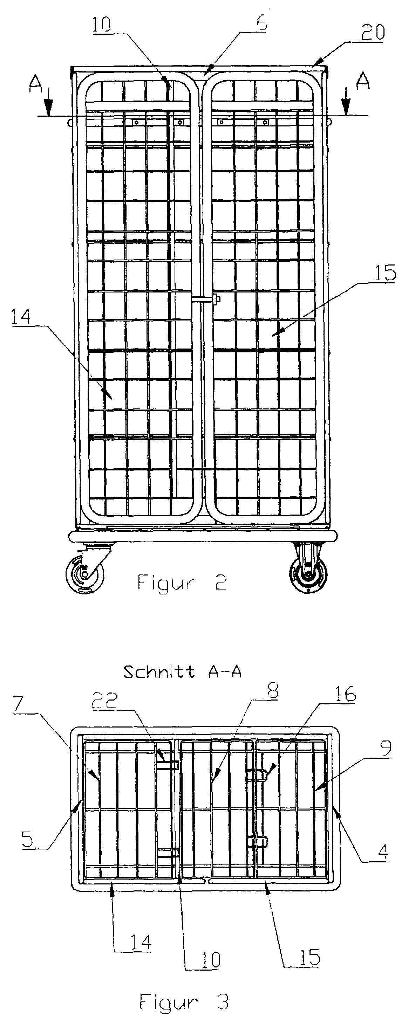

Der in Figur 1 gezeigte Transportwagen für Wäsche 1 weist ein Fahrgestell 2 mit Rollen 3 auf, das einen kastenförmigen Aufbau trägt. Der kastenförmige Aufbau setzt sich aus feststehenden Seitenwänden 4,5 und einer feststehenden Rückwand 6 zusammen. Eine Zwischenwand 10 ist parallel den Seitenwänden 4,5 zwischen ihnen angeordnet. Zwischen den Seitenwänden 4,5 und der Zwischenwand 10 befinden sich klappbare Fachböden 7,8,9. Die Zwischenwand 10 teilt den Raum zwischen den Seitenwänden 4,5 in zwei ungleich große Abteile 12,13 auf. Die Abteile 12,13 sind an der Vorderseite des Transportwagens durch zwei Flügeltüren 14,15 verschließbar (Figur 2). Die Wände 4,5,6,10, die Flügeltüren 14,15 und die Fachböden 7,8,9 bestehen aus gitterförmig gekreuzten dünnen Stahlstäben.

Die ungeteilten Fachböden 7 des kleineren Abteils 13 sind an der Seitenwand 5 angelenkt und an der Zwischenwand arretierbar. Figur 1 zeigt, daß die zum Anlenken dieser Fachböden 7 benötigten Ösen 21 eine ovale Form haben. Dadurch wird es ermöglicht, daß die Fachböden 7 mittels eines Hakens 22 in der Zwischenwand 10 eingehakt werden können, aber auch problemlose wieder gelöst und nach unten geklappt werden können, ohne daß der Haken 22 erneut in die Zwischenwand 10 eingreift.

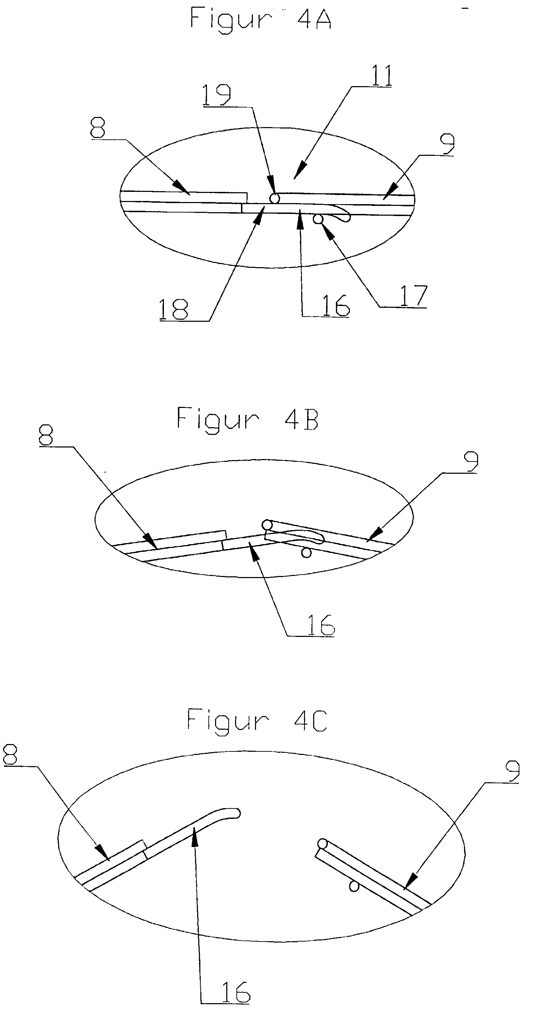

Die geteilten Fachböden 8,9 sind in dem größeren Abteil 12 angeordnet und bilden Paare von Teilböden. Dabei ist jeweils der eine Teilboden 8 eines Teilbodenpaares an der Zwischenwand 10 und der andere Teilboden 9 desselben Teilbodenpaares an der Zwischenwand 4 angelenkt. Die Teilböden 8,9 weisen an den den Anlenkungen gegenüberliegenden Rändern einen Stützmechanismus 11 auf, mittels dem sie sich aufeinander abstützen. Dieser Stützmechanismus 11 besteht aus Nasen 16, die ein kammartiges Element bilden, und aus Aufnahmen, in die die Nasen 16 eingreifen. Wie Figur 4a zeigt, werden diese Aufnahmen für die Nasen 16 von einem Abstützpunkt 17 des dem Teilboden 8 mit den Nasen 16 gegenüberliegenden Teilbodens 9 gestützt. Sie selbst stützen an einem weiteren Abstützpunkt 18 den Rand 19 des gegenüberliegenden Teilbodens 9 ab. Dieser formschlüssige Stützmechanismus 11 verriegelt bei der Beladung mit Wäsche die beiden Teilböden 8,9 miteinander und hält sie in einer solchen horizontalen Lage, daß die Gitterstäbe der Teilböden 8,9 eine stufenlose Auflagefläche für die Wäsche bilden. Der Stützmechanismus 11 kann durch Anheben der Teilböden 8,9, wie dies der Sequenz der Figuren 4a,4b,4c zu entnehmen ist, entriegelt werden.

Oberhalb des Transportwagens 1 ist eine sich über die gesamte Breite des Transportwagens 1 erstreckende Stange 20 angeordnet. Die Stange 20 kann aus einer mittigen Stellung über dem Transportwagen, in der sie zum Aufhängen von Frischwäsche und Bekleidungsstücken oder bei hoher Beladung mit Schmutzwäsche zum Festklemmen der Schmutzwäsche dient, zur Rückwand hin in eine Position parallel zur Rückwand verschwenkt werden, in der sie zur Beladung des Transportwagens 1 dessen Oberseite ganz freigibt.

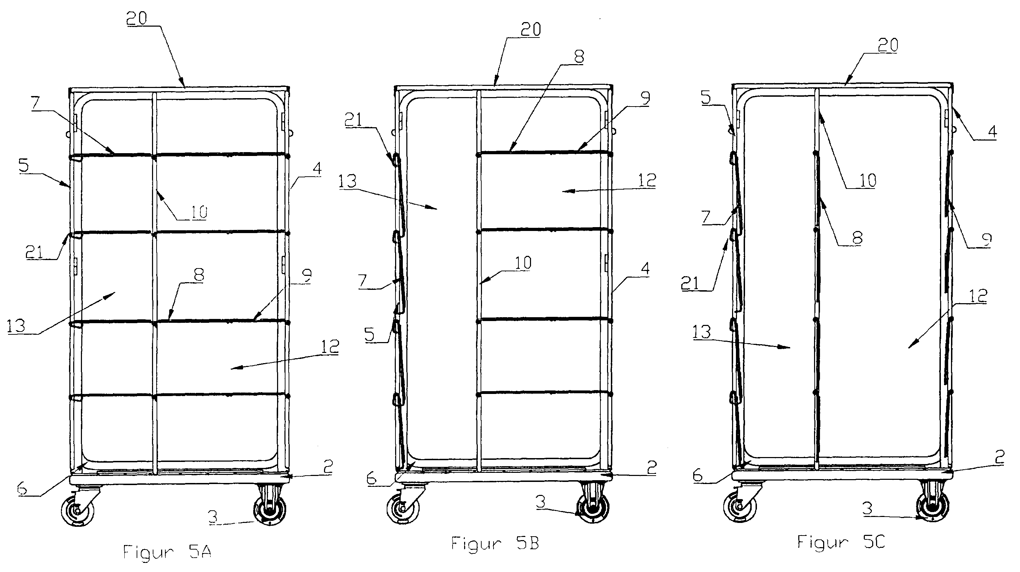

Das Zusammenwirken der geteilten Fachböden 8,9 mit der Teilung des Transportwagens in zwei Abteile 12,13 ermöglicht es, die in den Figuren 5a,5b und 5c dargestellten Transportkonfigurationen zu erhalten.

Hierbei ist in Figur 5a eine Konfiguration gezeigt, in der sich sowohl die ungeteilten als auch die geteilten Fachböden 7,8,9 in ihrer horizontalen Position befinden. Diese Konfiguration ermöglicht den Transport von ausschließlich gefalteter Frischwäsche.

Der Figur 5b ist eine Konfiguration zu entnehmen, in der die ungeteilten Fachböden 7 heruntergeklappt sind. Somit können in dem schmalen Abteil 13 hängende Frischwäsche und/oder gereinigte Kleidungsstücke transportiert werden, während in dem größeren Abteil 12 weiterhin gefaltete Frischwäsche transportiert werden kann. Die hängende Frischwäsche wird dabei auf die Trag- und Klemmstange 20 gehängt.

Der Figur 5c ist die für den Transport von ausschließlich hängender Frischwäsche und/oder gereinigter Kleidungsstücke oder den Transport von ausschließlich Schinutzwäsche verwendete Konfiguration zu entnehmen, bei der sowohl die geteilten als auch die ungeteilten Fachböden heruntergeklappt sind.

Eine weitere, nicht dargestellte Konfiguration sieht die ungeteilten Fachböden 7 in ihrer horizontalen und die geteilten Fachböden 8,9 in ihrer umgeklappten Position vor. Dies erlaubt den Transport größerer Mengen von hängender Frischwäsche und/oder gereinigter Kleidungsstücke und einer kleineren Menge von gefalteter Frischwäsche.

Figur 5c zeigt weiterhin, daß die heruntergeklappten geteilten Fachböden 8,9 nicht gefächert, sondern flach an der Seitenwand 4 oder der Zwischenwand 10 abschließen und somit keinen unnötigen Stauraum beanspruchen.

## Patentansprüche

1. Transportwagen (1) für Wäsche und/oder Kleidungsstücke mit einem Fahrgestell (2) mit Rollen (3) und einem kastenförmigen Aufbau, der feststehende Seitenwände (4,5) und eine feststehende Rückwand (6) sowie herunterklappbare und in horizontaler Stellung arretierbare Fachböden (7,8,9) aufweist,
**dadurch gekennzeichnet, daß** eine parallel zu den Seitenwänden (4,5) angeordnete Zwischenwand (10) den Aufbau in zwei Abteile (12,13) unterteilt, in denen die einteilig oder mit Teilböden geteilt ausgebildeten Fachböden (7,8,9) an den Seitenwänden (4,5) und/oder der Zwischenwand (10) angelenkt sind, wobei die einzelnen Fachböden (7,8,9) mit ihren den angelenkten Rändern gegenüberliegenden freien Rändern an der jeweils gegenüberliegenden Wand (10) arretierbar sind und die den angelenkten Rändern gegenüberliegenden freien Ränder der geteilten Fachböden (8,9) einen Stützmechanismus (11) aufweisen, mit dem sie in horizontaler Stellung bei Beladung mit einer Last aufeinander abstützend verriegelbar sind und nach Entlastung durch Hochklappen entriegelbar und herunterklappbar sind.

2. Transportwagen nach Anspruch 1,
**dadurch gekennzeichnet, daß** der Stützmechanismus (11) eines jeden Teilbodenpaares (8,9) aus mindestens einem kammartigen Element (16) eines Teilbodens (8) besteht, das so in den anderen Teilboden (9) eingreift, daß es sich an einem dem Anlenkpunkt entfernteren Abstützpunkt (17) auf dem gegenüberliegenden Teilboden (9) abstützt und an einem dem Anlenkpunkt näheren Abstützpunkt (18) den Rand des gegenüberliegenden Teilbodens (9) stützt.

3. Transportwagen nach einem der voranstehenden Ansprüche,
**dadurch gekennzeichnet, daß** die Abteile (12,13) verschieden breit sind.

4. Transportwagen nach Anspruch 3,
**dadurch gekennzeichnet, daß** sich in dem breiteren Abteil (12) die geteilten Fachböden (8,9) und in dem schmaleren Abteil (13) die ungeteilten Fachböden (7) befinden.

5. Transportwagen nach einem der Ansprüche 1 bis 4,
**dadurch gekennzeichnet, daß** die Teilböden (8,9) gleich groß sind.

6. Transportwagen nach Anspruch 5,
**dadurch gekennzeichnet, daß** der vertikale Abstand der geteilten Fachböden (8,9) zueinander gleich der Breite der Teilböden (8,9) ist.

7. Transportwagen nach einem der voranstehenden Ansprüche,
**dadurch gekennzeichnet, daß** die der Rückwand (6) gegenüberliegende Vorderwand verriegelbare Türen (14,15) aufweist.

8. Transportwagen nach einem der voranstehenden Ansprüche,
**dadurch gekennzeichnet, daß** die Seitenwände (4,5), die Rückwand (6), die Vorderwand (14,15) und die Fachböden (7,8,9) als Gitterwände und Gitterböden ausgebildet sind.

9. Transportwagen nach einem der voranstehenden Ansprüche,
**dadurch gekennzeichnet, daß** eine an den Seitenwänden (4,5) angelenkte, parallel zu der Rückwand (6) verlaufende Trag- und Klemmstange (20) aus einer ersten Position hinter beziehungsweise neben dem Aufbau in eine zweite Position über den Aufbau schwenkbar ist.
